# DEMANDE DE BREVET EUROPEEN

(11) **EP 4 406 916 A1**
(43) Date de publication de la demande: **31.07.2024**
(21) Numéro de dépôt: 24153457.7
(22) Date de dépôt: 23.01.2024
(51) Int. Cl.: C01B 33/025

(54) **APPAREIL ET PROCEDE DE PRODUCTION DE SILICIUM PAR CARBORÉDUCTION**

(30) Priorité: 27.01.2023 FR 2300779
(71) Demandeur: HPQ Silicium Inc., Montreal, Québec H1Y 3R8 (CA)
(72) Inventeur: KRAIEM, Jed, 69008 LYON (FR); NICHIPORUK, Oleksiy, 69780 MIONS (FR); DEGOULANGE, Julien, 69230 SAINT GENIS LAVAL (FR)
(74) Mandataire: Be IP

(57) **Abrégé**

La présente invention concerne un appareil pour la production de silicium à partir de quartz, l'appareil comprenant :
- une enceinte (2) étanche définissant un espace clos dans lequel une dépression peut être générée,
- un four à arc électrique (1) logé à l'intérieur de l'enceinte (2) et incluant une cuve pour contenir un mélange de réactifs,
***remarquable en ce que*** l'appareil comprend en outre un couvercle (3) logé dans l'enceinte (2) et adapté pour coiffer une ouverture supérieure de la cuve.

## Description

### DOMAINE DE L'INVENTION

La présente invention concerne le domaine technique général de la production de silicium à partir de quartz.

Notamment, l'invention est relative à un dispositif de production de silicium par carboréduction de quartz dans un four à arc électrique.

### ARRIERE PLAN DE L'INVENTION

La production de silicium métallique est généralement basée sur la réduction carbothermique de quartz à haute température et à pression atmosphérique.

Cette réduction carbothermique de quartz peut être réalisée en réduisant chimiquement le quartz en présence de réducteurs à base de carbone dans un four à arc électrique où un arc à haute température chauffe les réactifs (quartz et réducteurs).

Ceci permet de produire un silicium dit « *de grade métallurgique* » (ou *« MG-Si »* sigle de l'expression anglo-saxonne *"Metallurgical Grade Silicon")* ayant une pureté maximum de 98-99 %.

Le silicium de grade métallurgique peut être utilisé :
- en tant qu'élément d'alliage - par exemple dans l'industrie de l'aluminium et de l'acier - ou
- en tant que précurseur - par exemple dans l'industrie photovoltaïque (panneaux solaires), pour les silicones et pour le stockage d'énergie (batterie Lithium).

Les évolutions technologiques dans les domaines du photovoltaïque et du stockage d'énergie ont conduit le silicium de grade métallurgique à devenir un matériau stratégique. Par conséquent, l'approvisionnement en silicium de grade métallurgique de grande pureté à un coût raisonnable est devenu une nécessité.

Or, les dispositifs et procédés de production de silicium métallurgique conventionnels présentent de nombreux inconvénients tels qu'une teneur élevée en impuretés.

Pour remédier à cet inconvénient, il est possible d'utiliser une matière première (quartz) présentant une pureté élevée. Toutefois, cette solution augmente le coût de production du silicium métallurgique produit.

Le document US 11 267 714 propose une autre solution consistant à mettre en oeuvre la réduction carbothermique du quartz à haute température sous vide. Le fait de réaliser la réduction carbothermique du quartz sous vide permet de favoriser l'évaporation des impuretés présentes dans les réactifs (quartz et réducteurs) ainsi que dans le silicium de grade métallurgique liquide nouvellement produit.

En référence à la figure 1, l'appareil selon US 11 267 714 comprend un four à arc FA électrique et une enceinte E fermée étanche contenant le four à arc FA. Cet agencement (enceinte E étanche contenant le four à arc FA) permet de contrôler la pression à laquelle la réduction carbothermique du quartz est mise en oeuvre.

Cependant, les variantes de réalisation de l'appareil décrit dans US 11 267 714 présentent certaines limitations qui rendent difficile une utilisation de la solution selon US 11 267 714 à une échelle industrielle :
- une première limitation concerne le taux de réaction relativement faible des réactifs (quartz et réducteurs),
- une deuxième limitation concerne la quantité d'énergie électrique nécessaire à la production de silicium de grade métallurgique.

Ces deux limitations (faible rendement réactionnel, forte consommation électrique) rendent la solution décrite dans US 11 267 714 trop coûteuse pour être exploitée industriellement.

Un but de la présente invention est de proposer un appareil de production de silicium à partir de quartz permettant de pallier au moins l'un des inconvénients précités. Notamment, un but de la présente invention est de proposer une (ou plusieurs) amélioration(s) à l'appareil selon US 11 267 714 pour faciliter son utilisation à l'échelle industrielle.

### BREVE DESCRIPTION DE L'INVENTION

A cet effet, l'invention propose un appareil pour la production de silicium à partir de quartz, l'appareil comprenant :
- une enceinte étanche définissant un espace clos, l'enceinte étant raccordée à au moins une pompe d'aspiration pour générer une différence de pression entre l'intérieur et l'extérieur de l'espace clos, la pression à l'intérieur de l'espace clos étant inférieure à la pression à l'extérieur de l'espace clos lorsque la pompe d'aspiration est activée,
- un four à arc électrique logé à l'intérieur de l'enceinte étanche, le four à arc incluant :
   ∘ une cuve pour contenir un mélange de matières premières pour la production du silicium,
   ∘ un ensemble d'électrodes configurées pour former un arc électrique de chauffage du mélange,
***remarquable en ce que*** l'appareil comprend en outre un couvercle mobile logé dans l'enceinte , le couvercle étant adapté pour coiffer une ouverture supérieure de la cuve. Des aspects préférés mais non limitatifs de l'appareil selon l'invention sont les suivants :
- le couvercle peut comprendre un plateau de couverture, et au moins un arbre de soutien fixé au plateau de couverture, le couvercle mobile pouvant être déplacé entre :
   ∘ une position fermée dans laquelle le plateau de couverture recouvre totalement l'ouverture supérieure de la cuve, et
   ∘ une position ouverte dans laquelle l'ouverture supérieure de la cuve est au moins partiellement découverte ;
- le plateau de couverture peut comprendre au moins une lumière traversante et au moins un composant d'obturation associé, chaque composant d'obturation étant mobile entre :
   ∘ une position dégagée dans laquelle la lumière traversante est débouchée pour permettre la circulation d'un gaz entre :
      ▪ une première région définie entre la cuve et le plateau de couverture , et
      ▪ une deuxième région extérieure à la première région,
   ∘ une position obturée dans laquelle la lumière traversante est bouchée pour limiter la circulation du gaz entre les première et deuxième régions ;
- avantageusement :
   ∘ chaque lumière traversante peut être composée d'un évent tronconique ménagé dans le plateau de couverture, et
   ∘ chaque élément d'obturation associé peut être composé :
      ▪ d'un bouchon de forme complémentaire à l'évent tronconique et
      ▪ d'une tige de suspension fixée au bouchon pour permettre son déplacement en translation entre les positions dégagée et obturée ;
- le plateau de couverture peut comporter :
   ∘ une plaque incluant des perforations cylindriques,
   ∘ un palet rotatif configuré pour reposer sur la plaque de manière à pouvoir tourner autour d'un axe, le palet rotatif incluant des perforations traversantes pouvant être amenées, par rotation autour de l'axe, à se superposer avec les perforations traversantes de la plaque ;
- l'appareil peut également comprendre une unité de contrôle configuré pour piloter :
   ∘ la pompe d'aspiration de l'enceinte,
   ∘ une source d'alimentation en gaz neutre de l'enceinte,
   ∘ une source d'alimentation en énergie électrique des électrodes,
   ∘ un moteur de déplacement du couvercle ;
- l'unité de contrôle peut être configurée pour :
   ∘ lors d'une phase de prétraitement :
      ▪ diminuer la pression à l'intérieur de l'espace clos à une valeur inférieure à la pression atmosphérique,
      ▪ mettre en oeuvre un chauffage résistif du mélange de matières premières,
      ▪ séparer le couvercle des bords de l'ouverture supérieure,
   ∘ lors d'une phase de carboréduction :
      ▪ exécuter une étape d'initiation composée des sous-étapes consistant à :
         - augmenter la pression à l'intérieur de l'espace clos à une valeur sensiblement égale à la pression atmosphérique,
         - mettre en oeuvre un chauffage par arc électrique du mélange de matières premières,
         - mettre le couvercle en contact avec les bords de l'ouverture supérieure,
      ▪ puis lorsque la température du mélange est supérieure à 2000°C, exécuter une étape de traitement consistant à :
         - maintenir la pression à l'intérieur de l'espace clos à la valeur sensiblement égale à la pression atmosphérique,
         - maintenir le chauffage par arc électrique du mélange de matières premières,
         - entrouvrir le couvercle,
   ∘ lors d'une phase de posttraitement :
      ▪ diminuer la pression à l'intérieur de l'espace clos à une valeur inférieure à la pression atmosphérique,
      ▪ séparer le couvercle des bords de l'ouverture supérieure ;
- l'enceinte étanche peut comprendre :
   ∘ un plancher,
   ∘ un plafond s'étendant parallèlement au plancher, et
   ∘ au moins une cloison latérale s'étendant entre le plancher et le plafond ;
- le couvercle peut comprendre des éléments d'interface constitués dans un matériau électriquement isolant :
   ∘ au moins un élément d'interface étant positionné entre le plateau de couverture et une électrode de l'ensemble d'électrodes,
   ∘ au moins un élément d'interface étant positionné entre le plateau de couverture et la cuve.

L'invention concerne également un procédé pour la production de silicium à partir de quartz à partir d'un appareil tel que défini ci-dessus, remarquable en ce que le procédé comprend les phases suivantes :
- une phase de prétraitement incluant les étapes consistant à :
   ∘ diminuer la pression à l'intérieur de l'espace clos à une valeur inférieure à la pression atmosphérique,
   ∘ mettre en oeuvre un chauffage résistif du mélange de matières premières,
   ∘ séparer le couvercle des bords de l'ouverture supérieure,
- une phase de carboréduction incluant :
   ∘ une étape d'initiation composée des sous-étapes consistant à :
      ▪ augmenter la pression à l'intérieur de l'espace clos à une valeur sensiblement égale à la pression atmosphérique,
      ▪ mettre en oeuvre un chauffage par arc électrique du mélange de matières premières,
      ▪ mettre le couvercle en contact avec les bords de l'ouverture supérieure,
   ∘ puis lorsque la température du mélange est supérieure à 1500°C, une étape de traitement composée des sous-étapes consistant à :
      ▪ maintenir la pression à l'intérieur de l'espace clos à la valeur sensiblement égale à la pression atmosphérique,
      ▪ maintenir le chauffage par arc électrique du mélange de matières premières,
      ▪ entrouvrir le couvercle,
- une phase de posttraitement incluant les étapes consistant à :
   ∘ diminuer la pression à l'intérieur de l'espace clos,
- séparer le couvercle des bords de l'ouverture supérieure.

### BRÈVE DESCRIPTION DES DESSINS

D'autres avantages et caractéristiques du dispositif et du procédé de production de silicium selon l'invention ressortiront mieux de la description qui va suivre de plusieurs variantes d'exécution, données à titre d'exemples non limitatifs, à partir des dessins annexés sur lesquels :
- La figure 1 est une représentation schématique d'un dispositif de production de silicium de l'art antérieur,
- La figure 2 est un schéma de principe du dispositif de production de silicium selon l'invention,
- La figure 3 est une représentation schématique d'un premier mode de réalisation du dispositif de production de silicium selon l'invention,
- La figure 4 est une représentation schématique d'un deuxième mode de réalisation du dispositif de production de silicium selon l'invention,
- La figure 5 est une représentation schématique d'un troisième mode de réalisation du dispositif de production de silicium selon l'invention
- La figure 6 est une représentation schématique d'une cuve du dispositif de production de silicium selon l'invention,
- La figure 7 est une représentation schématique partielle d'un four à arc électrique,
- La figure 8 est une représentation schématique d'un couvercle du dispositif de production de silicium selon l'invention,
- Les figures 9a, 9b, et 9c sont des représentations schématiques en vue de dessus d'un couvercle selon l'invention,
- La figure 10 est une représentation schématique de différentes phases d'un procédé de production de silicium selon l'invention.

### DESCRIPTION DETAILLEE DE L'INVENTION

On va maintenant décrire différents exemples de réalisation de l'invention en référence aux figures. Dans ces différentes figures, les éléments équivalents sont désignés par la même référence numérique.

### 1. Généralités

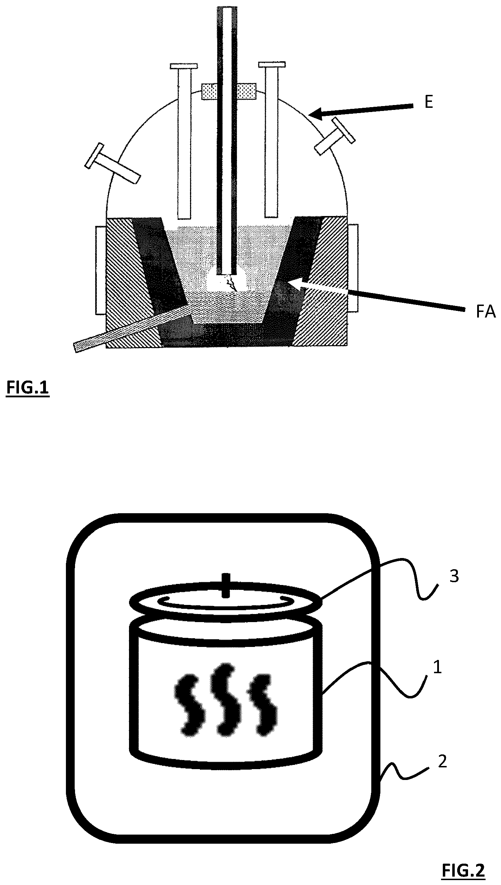

En référence à la figure 2, l'appareil selon l'invention comprend :
- un four à arc électrique 1,
- une enceinte 2 étanche, et
- un couvercle 3 adapté pour coiffer une cuve 11 du four à arc électrique 1, le four à arc 1 et le couvercle 3 étant logés dans l'enceinte 2.

### 2. Présentation des composants de l'appareil selon l'invention

### 2.1. Four à arc

Le four 1 à arc permet :
- d'une part de contenir les réactifs - à savoir le quartz et les réducteurs - pour la production de silicium de grade métallurgique, et
- d'autre part de chauffer à haute température lesdits réactifs pour induire la réaction de réduction carbothermique du quartz.

Le four à arc 1 est de type connu en soit par l'homme du métier, et son fonctionnement ne sera pas décrit en détail dans la suite. Il comprend notamment la cuve 11 et des électrodes 12.

### 2.1.1. Cuve

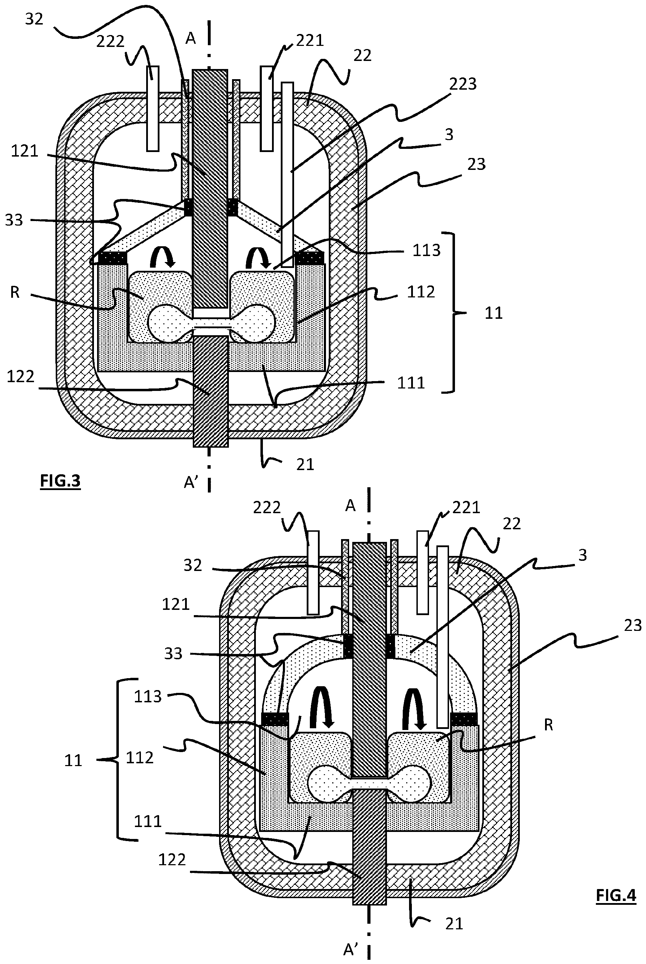

Comme illustré aux figures 3 à 5, la cuve 11 peut être constituée par une carcasse en graphite revêtue extérieurement d'un garnissage réfractaire. En variante, la cuve 11 peut être réalisée en silice, en métal ou en carbure de silicium (SiC).

La cuve 11 (ou creuset) est destinée à contenir les réactifs, mais également le silicium liquide issu de la réaction de réduction carbothermique du quartz.

La cuve comporte un fond 111, une (ou plusieurs) paroi(s) latérale(s) 112, et une ouverture supérieure 113. On note A-A', un axe central longitudinal de l'appareil qui est vertical lorsque l'appareil est posé sur une surface plane horizontale. Une paroi latérale du four à arc 1 est sensiblement centrée sur l'axe A-A'.

Dans la suite, la description est orientée en considérant que les termes « *supérieur* » et « *haut* » correspondent à une direction globalement parallèle à l'axe A-A' et allant du fond 111 vers l'ouverture 113, tandis que les termes *« inférieur »* et *« bas »* correspondent à une direction opposée.

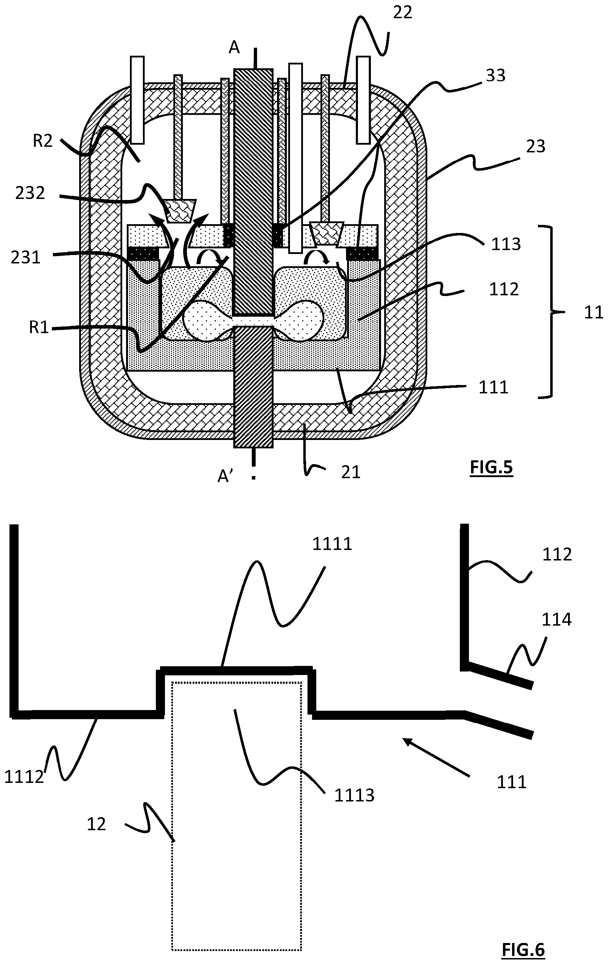

En référence à la figure 6, le fond 111 de la cuve 11 peut comprendre un plot 1111 faisant saillie vers l'intérieur de la cuve 11. Plus précisément, le plot 1111 fait saillie à partir du fond 111 et s'étend le long de l'axe A-A'. Le plot 1111 peut être réalisé dans un matériau électriquement conducteur et constituer l'une des électrodes 12.

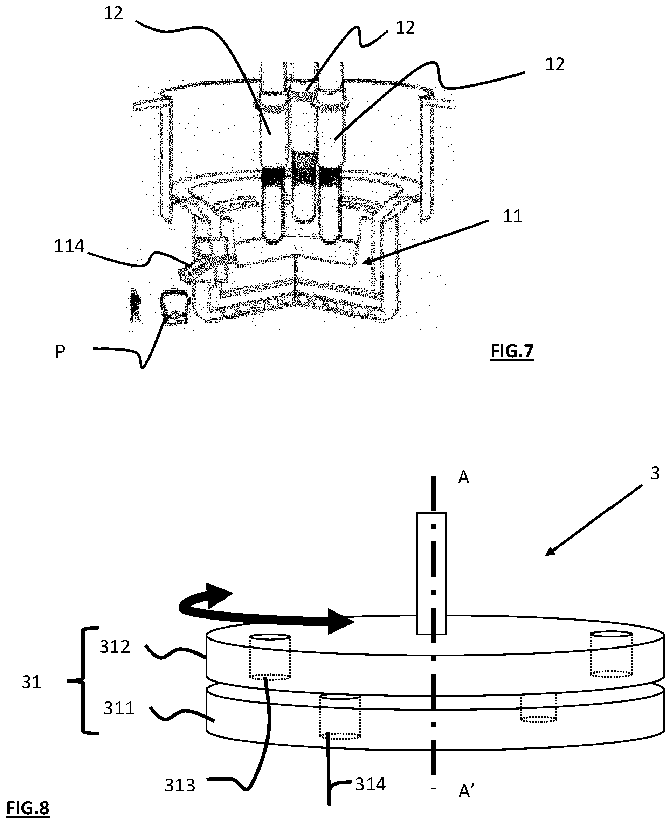

En variante, le fond 111 peut être dépourvu de plot et comprendre uniquement un évidement circulaire 1113 au travers duquel est monté l'une des électrodes 12. En variante encore, le fond 111 de la cuve 11 peut être dépourvu de plot et d'évidement circulaire 1113, notamment dans le cas où l'électrode (ou les électrodes) du four à arc est (sont) montée(s) au-dessus de la cuve 11, comme illustré à la figure 7.

Dans certaines variantes de réalisation, la cuve 11 peut comprendre un système de refroidissement (non représenté) dans sa partie supérieure. Ce système de refroidissement est par exemple composé d'un (ou plusieurs) panneau(x) dans lequel (lesquels) circule(nt) un fluide caloporteur. Dans ce cas, le (ou les) panneau(x) est (sont) monté(s) sur un bord supérieur de la (ou des) paroi(s) latérale(s) 112. L'intégration d'un système de refroidissement à la cuve 11 permet de contrôler précisément la température dans le four à arc 1 afin de créer un gradient de température verticalement, notamment en vue d'augmenter la quantité de réactif consommée lors de la réaction de réduction carbothermique du quartz, et ainsi d'améliorer le rendement de la réaction.

Dans d'autres variantes de réalisation, la cuve 11 est dépourvue de système de refroidissement.

La cuve 11 comporte également un canal (ou plusieurs canaux) de coulée 114 pour l'évacuation du silicium de grade métallurgique produit (à l'état liquide) vers une poche de coulée P destinée à le recevoir pour son stockage ultérieur.

Un système d'obturation - tel qu'un clapet ou une busette ou un bouchon en matériau carboné - peut être prévu pour la fermeture du canal (ou des canaux) de coulée 114 durant la réaction de réduction carbothermique du quartz.

Au moment de la coulée, la cuve 11, qui peut être montée par exemple sur un berceau basculant, est inclinée en direction de la poche de coulée de sorte à envoyer progressivement le silicium de grade métallurgique à l'état liquide à travers le canal (ou les canaux) de coulée. Le canal (ou les canaux) de coulée étant alors ouvert(s), le silicium de grade métallurgique liquide peut alors s'écouler hors de la cuve et être recueilli dans la poche de coulée.

Bien entendu, d'autres configurations sont possibles pour permettre l'extraction du silicium de grade métallurgique. Par exemple, le fond du récipient peut présenter une pente non nulle en direction du canal (ou des canaux) de coulée de sorte à envoyer le silicium de grade métallurgique vers la poche de coulée lorsque le système d'obturation est retiré du canal (méthode connue sous le terme "tapping" en langue anglaise).

### 2.1.2. Electrodes

Pour la formation de l'arc électrique permettant le chauffage des réactifs (quartz et réducteur), le four à arc 1 comprend des électrodes 12 alimentées soit à partir d'une source de courant continu ou à partir d'une source de courant alternatif.

De préférence, les électrodes 12 sont placées dans l'axe du four à arc 1 de sorte à être sollicitées d'une façon relativement symétrique. Plus précisément, chaque électrode 12 peut consister en une barre cylindrique de graphite s'étendant verticalement.

Dans le mode de réalisation illustré aux figures 3 à 5, le four à arc 1 comprend :
- une (ou plusieurs) électrode(s) mobile(s) 121 maintenue(s) par un (ou des) support(s) non représenté(s), la (ou chaque) électrode mobile 121 pouvant être introduite dans le four à arc 1 en passant (chacune) par un trou du couvercle 3 ,
- une (ou plusieurs) électrode(s) fixe(s) 122 logée(s) dans le fond 111 de la cuve 11.

Le(s) support(s) maintenant la (ou les) électrode(s) mobile(s) permet(tent) de faire varier la distance entre les extrémités des électrodes fixe(s) et mobile(s) pour contrôler la quantité d'énergie transférée au Silicium liquide.

Comme indiqué précédemment, chaque électrode 121, 122 est reliée à une source de courant continu ou à une source de courant alternatif. Un des avantages d'une alimentation en courant continu est que les électrodes ne sont pas soumises aux effets électromagnétiques que subissent les électrodes d'un four alimenté à partir d'une source de courant alternatif.

Dans le cas d'une alimentation en courant continu :
- la (ou les) électrode(s) mobile(s) 121 peut (peuvent) être raccordée(s) au pôle positif de la source de courant continu pour former anode,
- la (ou les) électrode(s) fixe(s) peut (peuvent) être raccordée(s) au pôle négatif de la source de courant continu et former cathode.

### 2.2. Enceinte

L'enceinte 2 étanche permet de définir un espace clos dans lequel il est possible de générer une dépression, c'est-à-dire un espace dans lequel il est possible de diminuer la pression à une valeur inférieure à la pression atmosphérique.

Une telle enceinte peut présenter différentes formes et être réalisée à partir de différents matériaux pour assurer cette fonction.

Ainsi, on entend, dans le cadre de la présente invention, par *« enceinte étanche »,* un caisson composé d'au moins une paroi de part et d'autre de laquelle il existe une différence de pression. Ainsi, l'enceinte étanche permet de délimiter deux zones (i.e. une zone interne et une zone externe) entre lesquelles existe une différence de pression. Dans les modes de réalisation illustrés aux figures 3 à 5, l'enceinte 2 étanche présente une forme cylindrique, et est essentiellement constituée de parois d'acier.

Cette enceinte 2 étanche comprend :
- un plancher 21 horizontal,
- un plafond 22 horizontal, et
- une (ou plusieurs) cloison(s) latérale(s) 23 verticale(s) s'étendant entre le plancher 21 et le plafond 22.

La (ou l'une des) cloison(s) latérale(s) 23 peut comprendre un accès (trouée non représentée) pour permettre à un opérateur d'accéder à l'intérieur de l'enceinte 2. En fonctionnement, cet accès est obturé par une porte normalement verrouillée de façon étanche par toute technique connue de l'homme de l'art, par exemple par boulonnage de la porte sur ladite paroi latérale, un joint d'étanchéité (par exemple en caoutchouc) étant monté entre les bords périphériques de l'accès et de la porte en regard (i.e. entre les bords de l'accès et les bords de la porte se faisant face).

L'enceinte 2 étanche comprend également un (ou plusieurs) orifice(s) traversant(s), éventuellement pour le passage :
- d'un (ou de plusieurs) canal (canaux) d'injection 221 de gaz dans l'enceinte 2, chaque canal pouvant être connecté à une source d'alimentation en gaz (tel que de l'argon),
- d'un (ou de plusieurs) canal (canaux) d'aspiration 222 de gaz contenus dans l'enceinte 2, chaque canal pouvant être connecté à une pompe d'aspiration pour permettre la génération d'une dépression à l'intérieur de l'enceinte 2,
- d'une (ou des) électrode(s) 121, 122,
- d'un (ou de plusieurs) conduit(s) d'alimentation 223 du four à arc 1 en réactifs R (quartz, réducteurs, etc.).
- de moyens de connexion électrique (tel qu'un câble électriquement conducteur, par exemple pour le raccordement électrique d'un capteur contenu dans l'enceinte, etc.),
- d'un (ou de plusieurs) arbre(s) de soutien 32 du couvercle 3.

Lorsque l'enceinte 2 comprend plusieurs orifices, ceux-ci peuvent être ménagées dans une seule de ces parois ou dans plusieurs parois distinctes.

### 2.3. Couvercle

Le couvercle 3 est configuré pour coiffer l'ouverture supérieure 113 de la cuve 11.

Le couvercle 3 permet de contenir les gaz, et notamment le composé gazeux d'oxyde de silicium (SiO) - formé lors de la réaction de carboréduction du quartz à l'intérieur de la cuve 11 du four à arc 1. Ceci permet de limiter les risques d'encrassement de l'enceinte 2, notamment au niveau de ses cloisons 21, 22, 23 et du canal (ou des canaux) d'aspiration 222.

Par ailleurs, le couvercle 3 permet de maintenir le four à arc 1 à une température (et plus précisément à un gradient de températures) favorisant la consommation des réactifs. On augmente ainsi le taux de réaction du dispositif, notamment vis-à-vis du dispositif de production de silicium décrit dans US 11 267 714.

Le couvercle 3 comprend un plateau de couverture 31, un (ou plusieurs) arbres de soutien 32.

Le plateau de couverture 31 peut présenter différentes formes. Par exemple, le plateau de couverture 31 peut présenter une forme tronconique (figure 3), une forme de dôme (figure 4), ou une forme de disque (figure 5). Le plateau de couverture 31 peut être réalisé dans tout type de matériau d'isolation thermique réfractaire connu de l'homme du métier tel que du graphite.

Avantageusement, le couvercle 3 est mobile. Plus précisément, le couvercle 3 peut être déplacé entre :
- une position fermée dans laquelle le plateau de couverture 31 recouvre totalement l'ouverture supérieure 113 de la cuve 11 (les bords du couvercle 3 étant en contact avec les bords de l'ouverture supérieure 113 dans la position fermée), et
- une position ouverte dans laquelle le plateau de couverture 31 ne recouvre pas (ou recouvre partiellement) l'ouverture supérieure 113 de la cuve 11.

Pour ce faire, le (ou les) arbre(s) de soutien 32 du couvercle 3 peut (peuvent) être connecté(s) à un (ou plusieurs) moteur(s).

Le fait que le couvercle 3 soit mobile permet d'accéder à l'intérieur de la cuve du four à arc 1, par exemple :
- pour des opérations de maintenance du four à arc 1, et/ou
- pour charger/recharger l'intérieur de la cuve 11 en réactifs nécessaires à la réaction de carboréduction, et/ou
- pour favoriser l'évacuation de certains gaz produits lors de la réaction de carboréduction, etc.

Dans les modes de réalisation illustrés aux figures 3 à 5, le plateau de couverture 31 du couvercle 3 comprend des évidements pour le passage :
- d'une (ou de plusieurs) des électrode(s) 121,
- du (ou des) conduit(s) d'alimentation 223 du four à arc 1 en réactifs R.

De préférence, le couvercle 3 est isolé électriquement (et éventuellement thermiquement) des autres composants du dispositif.

En particulier dans les modes de réalisation illustrés aux figure 3 à 5, le couvercle 3 est isolé électriquement :
- de l'électrode 121 (ou des électrodes 121) s'étendant au-dessus de l'ouverture supérieure 113 de la cuve 11,
- de la cuve 11 sur laquelle il est configuré pour reposer (ceci permet d'isoler électriquement le couvercle de l'électrode 122 disposée sous le fond 111 de la cuve 11), et
- du (ou des) conduit(s) d'alimentation 223 (ceci permet de limiter les risques d'électrocution d'un opérateur situé à l'extérieur du dispositif.

A cet effet, le couvercle 3 comprend des éléments d'interface 33 constitués dans un matériau électriquement (et éventuellement thermiquement) isolant, tel que du, de la zircone ou toute autre matériau connu de l'homme du métier.

Avantageusement, le couvercle 3 peut également comprendre une (ou plusieurs) lumière(s) traversante(s) 231 apte à être bouchée(s) par un (ou plusieurs) composant(s) d'obturation 232 mobile(s). Ces lumières traversantes 231 forment des conduites d'échappement des gaz confinés dans une région R1 définie entre la cuve 11 et le plateau de couverture 31 lorsque le couvercle 3 est dans la position fermée. Le(s) composant(s) peut (peuvent) être déplacé(s) entre :
- une position dégagée dans laquelle la (ou les) lumière(s) traversante(s) est (sont) débouchée(s) pour permettre la circulation des fluides (en particulier les gaz) entre la région R1 et une région R2 extérieure à la région R1 définie entre la cuve 11 et le plateau de couverture 31,
- une position obturée dans laquelle la (ou les) lumière(s) traversante(s) est (sont) bouchée(s) pour confiner les fluides dans la région R1 définie entre la cuve 11 et le plateau de couverture 31.

Bien entendu différentes configurations pour la réalisation des lumières traversantes et des composants d'obturation peuvent être envisagées.

Par exemple, dans le mode de réalisation illustré à la figure 5 le plateau de couverture 31 est constitué d'une unique plaque de graphite dans laquelle des évents tronconiques - formant lumières traversantes 231 - sont ménagés. Des bouchons - formant composant d'obturation 232 - de forme complémentaire aux évents tronconiques sont prévus au droit des évents, chaque bouchon étant associé à un évent respectif et étant suspendu à une tige pour permettre son déplacement en translation entre les positions dégagée et obturée.

En variante, dans le mode de réalisation illustré à la figure 8, le plateau de couverture 31 est de type à fermeture rotative. Notamment, le plateau de couverture 31 comprend une plaque 311 incluant des perforations cylindriques 313 formant lumières traversantes. La plaque 311 est destinée à reposer sur les bords de l'ouverture supérieure 113.

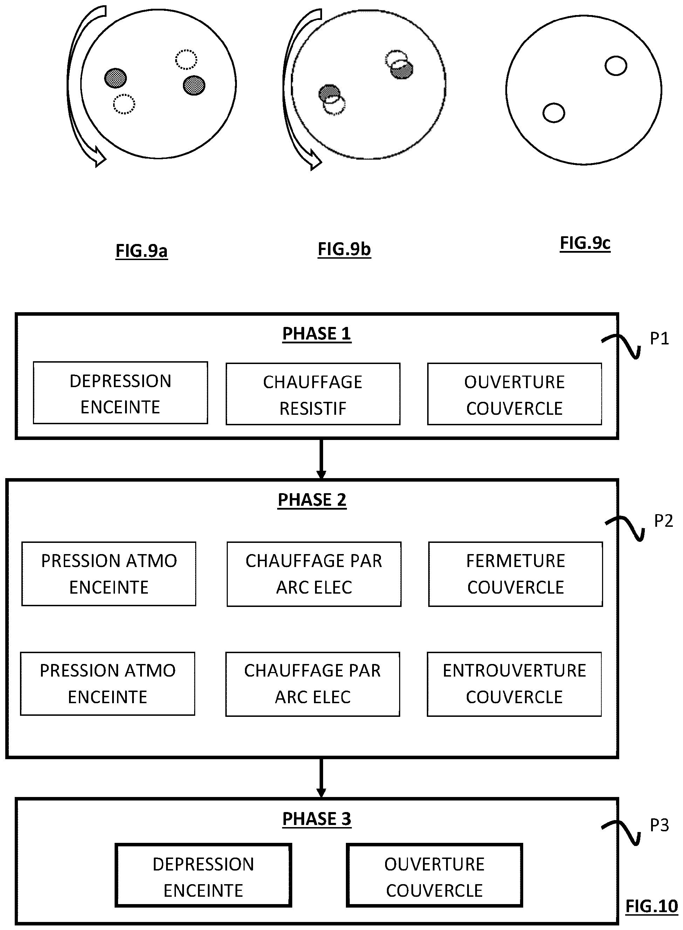

Le plateau de couverture 31 comprend également un palet rotatif 312 configuré pour reposer sur la plaque 311 de manière à pouvoir tourner sur lui-même autour de l'axe central longitudinal A-A'. Le palet rotatif 312 comprend également des perforations traversantes 314 pouvant être amenées à se superposer, par des rotations relatives, avec les perforations traversantes 313 de la plaque 311 :
- lorsque les perforations traversantes 313, 414 se superposent (cf. figure 9c), elles définissent un passage pour l'évacuation des gaz et de la chaleur contenus dans la région R1,
- lorsque les perforations traversantes 313, 314 ne se superposent pas (cf. figure 9a), les gaz et la chaleur contenus dans la région R1 sont bloqués dans celle-ci.

Ainsi, le palet rotatif 312 incluant des perforations traversantes forme le composant d'obturation.

### 3. Principe de fonctionnement

On va maintenant décrire le principe de fonctionnement de l'appareil selon l'invention en référence à la figure 10 représentant les étapes principales d'un procédé pour la production de silicium à partir de quartz. Ces étapes peuvent être exécutées par une unité de contrôle permettant de piloter les composants de l'appareil décrit au point 2 ci-dessus.

### 3.1. Unité de contrôle

L'unité de contrôle est par exemple un/des ordinateur(s), un/des processeur(s), un/des microcontrôleur(s), un/des micro-ordinateur(s), un/des automate(s) programmable(s), un/des circuit(s) intégré(s) spécifique(s) d'application, d'autres circuits programmables, ou d'autres dispositifs qui incluent un ordinateur tel qu'une station de travail.

L'unité de contrôle comprend une (ou plusieurs) mémoire(s) peut (peuvent) être une mémoire ROM/RAM, un CD-ROM, une clé USB, une mémoire de serveur central. Cette (ou ces) mémoire(s) permette(nt) de stocker des instructions de code programme pour l'exécution du procédé illustré à la figure 10.

### 3.2. Procédé de production de silicium

On suppose qu'un mélange de matières premières contenant par exemple du quartz, et un agent réducteur, typiquement du carbone, a été préalablement positionné dans la cuve 11.

### 3.2.1. Phase de pré-traitement

Une phase de prétraitement permettant l'initiation de la réaction de carboréduction ainsi que l'évacuation d'impuretés du mélange de matières premières est mise en oeuvre. Cette phase de prétraitement comprend les étapes :
- de génération d'une dépression dans l'enceinte étanche 2,
- de chauffage résistif (grâce à l'énergie transférée par les électrodes 12) du mélange de matières premières contenu dans la cuve 11, et
- d'ouverture du couvercle 3.

Pour la génération d'une dépression, l'unité de contrôle commande l'activation de la (ou des) pompe(s) d'aspiration pour aspirer les gaz contenus dans l'enceinte 2. Ceci permet de générer une différence de pression entre zone interne de l'enceinte 2 et une zone externe à l'enceinte 2.

Pour le chauffage résistif du mélange, l'unité de contrôle commande le déplacement de l'électrode (ou des électrodes) mobile(s) de sorte que celle(s)-ci vienne(nt) en contact avec l'électrode (ou les électrodes) fixe(s). L'unité de contrôle commande également l'activation de la source de courant (alternatif ou continu) raccordée aux électrodes pour les alimenter en énergie électrique. Cette énergie électrique est convertie en énergie thermique par les électrodes. Ceci permet de chauffer le mélange de matières premières à haute température (typiquement comprise entre 1000°C et 1500°C).

Pour l'ouverture du couvercle, l'unité de contrôle commande l'activation du (ou des) moteur(s) couplé(s) à l'arbre (ou aux arbres) de soutien 32 pour déplacer le couvercle 3 jusqu'à la position ouverte.

Durant cette phase de prétraitement, certaines impuretés sont volatilisées, celles ayant une pression de vapeur élevée. Le fait de générer une dépression dans l'enceinte, et d'ouvrir le couvercle tout en chauffant les matières premières permet de laisser s'échapper les impuretés hors de l'enceinte (celles-ci étant aspirées par la (ou les) pompe(s) d'aspiration).

### 3.2.2. Phase de carboréduction

Une fois cette phase de prétraitement terminée (lorsque la température dans l'enceinte atteint 1000°C à 1500°C), une phase de carboréduction est mise en oeuvre. Cette phase de carboréduction comprend les étapes :
- de retour à une pression atmosphérique dans l'enceinte étanche 2,
- de fermeture du couvercle 3 et de chauffage par arc électrique du mélange contenu dans le four à arc 1 jusqu'à une température de carboréduction, et
- d'entrouverture du couvercle 3 et de maintien du chauffage par arc électrique du mélange.

Pour le retour à la pression atmosphérique, l'unité de contrôle commande l'activation de la (ou des) source(s) d'alimentation en gaz pour injecter un gaz neutre (tel que de l'argon) dans l'enceinte 2. L'unité de contrôle commande également la désactivation de la (ou des) pompe(s) d'aspiration.

Pour le chauffage par arc électrique du mélange, l'unité de contrôle commande le déplacement de l'électrode (ou des électrodes) mobile(s) de sorte à éloigner celle(s)-ci de l'électrode (ou des électrodes) fixe(s). L'activation de la source de courant (alternatif ou continu) est maintenue pour permettre la formation d'un arc électrique entre les électrodes fixe(s) et mobile(s).

Pour la fermeture du couvercle 3, l'unité de contrôle commande l'activation du (ou des) moteur(s) couplé(s) à l'arbre (ou aux arbres) de soutien 32 pour déplacer le couvercle 3 jusqu'à la position fermée.

Pour entrouvrir le couvercle 3, l'unité de contrôle commande :
- si le couvercle est dépourvu de lumière traversante et de composant d'obturation, l'activation du (ou des) moteur(s) couplé(s) à l'arbre (ou aux arbres) de soutien 32 pour le déplacer dans une position intermédiaire comprise entre les positions ouverte et fermée,
- si le couvercle comprend une (ou des) de lumière(s) traversante(s) et un (ou des) composant(s) d'obturation, l'activation du (ou des) moteur(s) associé(s) au(x) composant(s) d'obturation pour le déplacer dans la position dégagée.

Le fait de fermer le couvercle 3 et de générer un arc électrique dans le four à arc permet d'augmenter rapidement la température du mélange jusqu'à 1500 à 2000°C.

Une fois la température atteinte, le fait d'entrouvrir le couvercle 3 tout en maintenant le chauffage par arc électrique permet une dissipation thermique de la partie supérieure du milieu réactionnel : un gradient de température se crée alors dans le milieu réactionnel (température élevée au fond de la cuve 11 et moins élevée au niveau de l'ouverture supérieure de la cuve 11). Le fait de former un gradient de température dans la cuve 11 du four à arc permet la formation des différents intermédiaires réactionnels dans les différentes zones de température ainsi que les échanges entre elles pour une réaction de carboréduction efficace.

### 3.2.3. Phase de post-traitement

A la fin de la réaction de carboréduction, quand toutes les matières premières ont réagi et que le silicium liquide est formé dans la cuve 2, le couvercle 3 est complètement relevé. La mise en dépression de l'enceinte 2 est à nouveau réalisée pour permettre l'élimination des impuretés présentes dans le silicium liquide et qui ont une pression de vapeur élevée tel que le Phosphore, et un chauffage de type résistif est à nouveau mis en oeuvre. L'unité de contrôle commande l'activation de la (ou des) pompe(s) d'aspiration pour aspirer les gaz contenus dans l'enceinte 2 et générer la dépression dans l'enceinte 2.

L'unité de contrôle commande également l'activation du (ou des) moteur(s) couplé(s) au couvercle 3 pour le déplacer jusqu'à la position ouverte.

L'unité de contrôle commande enfin :
- le déplacement de l'électrode (ou des électrodes) mobile(s) de sorte que celles-ci vienne(nt) en contact avec l'électrode (ou les électrodes) fixe(s)
- l'activation de la source de courant (alternatif ou continu) raccordée aux électrodes pour les alimenter en énergie électrique.

### 4. Conclusions

L'intégration d'un couvercle 3 dans un dispositif selon l'invention comportant un four à arc et une enceinte étanche présente de nombreux avantages par rapport à l'appareil selon US 11 267 714.

Notamment, la présence d'un couvercle permet d'augmenter le taux de réaction des matières premières du mélange.

En effet dans le procédé selon US 11 267 714, la zone réactionnelle n'est pas confinée. Or, comme indiqué précédemment, la réaction de carboréduction fait intervenir plusieurs intermédiaires réactionnels gazeux. Si ces intermédiaires réactionnels ne sont pas confinés à une même localisation, alors la réaction est partielle ce qui diminue le rendement de la réaction.

Par ailleurs, le fait de piloter l'ouverture et la fermeture du couvercle au cours de la réaction de carboréduction permet d'une part un meilleur contrôle du gradient de température à l'intérieur de la cuve du four à arc, la régulation du gradient de température étant un élément important dans la formation des différents intermédiaires réactionnels et leurs réactions entre eux pour la synthèse du Silicium.

Le lecteur aura compris que de nombreuses modifications peuvent être apportées à l'invention décrite précédemment sans sortir matériellement des nouveaux enseignements et des avantages décrits ici.

## Revendications

1. Appareil pour la production de silicium à partir de quartz, l'appareil comprenant :
- une enceinte (2) étanche définissant un espace clos, l'enceinte (2) étant raccordée à au moins une pompe d'aspiration pour générer une différence de pression entre l'intérieur et l'extérieur de l'espace clos, la pression à l'intérieur de l'espace clos étant inférieure à la pression à l'extérieur de l'espace clos lorsque la pompe d'aspiration est activée,
- un four à arc électrique (1) logé à l'intérieur de l'enceinte (2) étanche, le four à arc (1) incluant :
∘ une cuve (11) pour contenir un mélange de matières premières pour la production du silicium,
∘ un ensemble d'électrodes (12) configurées pour former un arc électrique de chauffage du mélange,
***caractérisé en ce que*** l'appareil comprend en outre un couvercle (3) mobile logé dans l'enceinte (2), le couvercle (3) étant adapté pour coiffer une ouverture supérieure (113) de la cuve (11).

2. Appareil selon la revendication 1, ***dans lequel*** le couvercle (3) comprend un plateau de couverture (31), et au moins un arbre de soutien (32) fixé au plateau de couverture (31), le couvercle (3) mobile pouvant être déplacé entre :
- une position fermée dans laquelle le plateau de couverture (31) recouvre totalement l'ouverture supérieure (113) de la cuve (11), et
- une position ouverte dans laquelle l'ouverture supérieure (113) de la cuve (11) est au moins partiellement découverte.

3. Appareil selon la revendication 2, ***dans lequel*** le plateau de couverture (31) comprend au moins une lumière traversante (231) et au moins un composant d'obturation (232) associé, chaque composant d'obturation étant mobile entre :
- une position dégagée dans laquelle la lumière traversante (231) est débouchée pour permettre la circulation d'un gaz entre :
∘ une première région (R1) définie entre la cuve (11) et le plateau de couverture (31), et
∘ une deuxième région (R2) extérieure à la première région (R1),
- une position obturée dans laquelle la lumière traversante est bouchée pour limiter la circulation du gaz entre les première et deuxième régions (R1, R2).

4. Appareil selon la revendication 3, ***dans lequel* :**
- chaque lumière traversante (231) est composée d'un évent tronconique ménagé dans le plateau de couverture (31),
- chaque élément d'obturation associé est composé :
∘ d'un bouchon de forme complémentaire à l'évent tronconique et
∘ d'une tige de suspension fixée au bouchon pour permettre son déplacement en translation entre les positions dégagée et obturée.

5. Appareil selon la revendication 2, ***dans lequel*** le plateau de couverture (31) comporte :
- une plaque (311) incluant des perforations cylindriques (313),
- un palet rotatif (312) configuré pour reposer sur la plaque (311) de manière à pouvoir tourner autour d'un axe (A-A'), le palet rotatif (312) incluant des perforations traversantes (314) pouvant être amenées, par rotation autour de l'axe (A-A'), à se superposer avec les perforations traversantes (313) de la plaque (311).

6. Appareil selon l'une quelconque des revendications 1 à 5, ***lequel*** comprend en outre une unité de contrôle configuré pour piloter :
- la pompe d'aspiration de l'enceinte (2),
- une source d'alimentation en gaz neutre de l'enceinte (2),
- une source d'alimentation en énergie électrique des électrodes (12),
- un moteur de déplacement du couvercle (3).

7. Appareil selon la revendication 6, dans lequel l'unité de contrôle est configurée pour :
- lors d'une phase de prétraitement :
∘ diminuer la pression à l'intérieur de l'espace clos à une valeur inférieure à la pression atmosphérique,
∘ mettre en oeuvre un chauffage résistif du mélange de matières premières,
∘ séparer le couvercle (3) des bords de l'ouverture supérieure (113),
- lors d'une phase de carboréduction :
∘ exécuter une étape d'initiation composée des sous-étapes consistant à :
▪ augmenter la pression à l'intérieur de l'espace clos à une valeur sensiblement égale à la pression atmosphérique,
▪ mettre en oeuvre un chauffage par arc électrique du mélange de matières premières,
▪ mettre le couvercle (3) en contact avec les bords de l'ouverture supérieure (113),
∘ puis lorsque la température du mélange est supérieure à 2000°C, exécuter une étape de traitement consistant à :
▪ maintenir la pression à l'intérieur de l'espace clos à la valeur sensiblement égale à la pression atmosphérique,
▪ maintenir le chauffage par arc électrique du mélange de matières premières,
▪ entrouvrir le couvercle (3),
- lors d'une phase de posttraitement :
∘ diminuer la pression à l'intérieur de l'espace clos à une valeur inférieure à la pression atmosphérique,
∘ séparer le couvercle (3) des bords de l'ouverture supérieure (113).

8. Appareil selon l'une quelconque des revendications 1 à 7, ***dans lequel*** l'enceinte (2) étanche comprend :
- un plancher (21),
- un plafond (22) 's'étendant parallèlement au plancher (21), et
- au moins une cloison latérale (23) s'étendant entre le plancher (21) et le plafond (22).

9. Appareil selon l'une quelconque des revendications 2 à 8, ***dans lequel*** le couvercle (3) comprend des éléments d'interface (33) constitués dans un matériau électriquement isolant :
- au moins un élément d'interface étant positionné entre le plateau de couverture (31) et une électrode de l'ensemble d'électrodes (12),
- au moins un élément d'interface étant positionné entre le plateau de couverture (31) et la cuve (11).

10. Procédé pour la production de silicium à partir de quartz à partir d'un appareil selon l'une quelconque des revendications 1 à 9, ***caractérisé en ce que*** le procédé comprend les phases suivantes :
- une phase de prétraitement incluant les étapes consistant à :
∘ diminuer la pression à l'intérieur de l'espace clos à une valeur inférieure à la pression atmosphérique,
∘ mettre en oeuvre un chauffage résistif du mélange de matières premières,
∘ séparer le couvercle des bords de l'ouverture supérieure,
- une phase de carboréduction incluant :
∘ une étape d'initiation composée des sous-étapes consistant à :
▪ augmenter la pression à l'intérieur de l'espace clos à une valeur sensiblement égale à la pression atmosphérique,
▪ mettre en oeuvre un chauffage par arc électrique du mélange de matières premières,
▪ mettre le couvercle en contact avec les bords de l'ouverture supérieure,
∘ puis lorsque la température du mélange est supérieure à 1500°C, une étape de traitement composée des sous-étapes consistant à :
▪ maintenir la pression à l'intérieur de l'espace clos à la valeur sensiblement égale à la pression atmosphérique,
▪ maintenir le chauffage par arc électrique du mélange de matières premières,
▪ entrouvrir le couvercle,
- une phase de posttraitement incluant les étapes consistant à :
∘ diminuer la pression à l'intérieur de l'espace clos,
∘ séparer le couvercle des bords de l'ouverture supérieure.
